# EUROPEAN PATENT SPECIFICATION

(11) **EP 4 008 122 B1**
(45) Date of publication and mention of the grant of the patent: **30.07.2025**
(21) Application number: 20849752.9
(22) Date of filing: 16.07.2020
(51) Int. Cl.: H04B 7/06, G01S 5/02, H04W 64/00, H04W 48/16, H04W 24/10, H04L 5/00

(54) **POSITIONING-SPECIFIC BEAM REFINEMENT FOR NEIGHBOR CELL POSITIONING REFERENCE SIGNAL (PRS) TRANSMISSION**
POSITIONSSPEZIFISCHE STRAHLVERFEINERUNG FÜR DIE ÜBERTRAGUNG VON NACHBARZELLENPOSITIONIERUNGSREFERENZSIGNALEN (PRS)
AFFINEMENT DE FAISCEAU SPÉCIFIQUE AU POSITIONNEMENT DESTINÉ À UNE TRANSMISSION DE SIGNAL DE RÉFÉRENCE DE POSITIONNEMENT (PRS) DE CELLULE VOISINE

(30) Priority: 02.08.2019 US 201962882168 P
(43) Date of publication of application: 08.06.2022
(73) Proprietor: Nokia Technologies Oy, 02610 Espoo (FI)
(72) Inventor: MICHALOPOULOS, Diomidis, 81541 Munich (DE); SÄILY, Mikko, 07150 Laukkoski (FI); PEREZ, Eva, 81543 Munich (DE); KOSKELA, Timo, 90670 Oulu (FI)
(74) Representative: Nokia EPO representatives
(86) International application number: PCT/FI2020/050497
(87) International publication number: WO 2021/023912

(56) References cited:
- WO-A1-2018/183991
- US-A1- 2016 337 916
- US-A1- 2017 324 459
- US-A1- 2018 007 577
- US-A1- 2019 123 864
- FRAUNHOFER IIS ET AL: "NR beam management supporting multi-gNB measurements for positioning", 2 November 2018 (2018-11-02), pages 1 - 8, XP051479922, Retrieved from the Internet <URL:http://www.3gpp.org/ftp/tsg%5Fran/WG1%5FRL1/TSGR1%5F95/Docs/R1%2D1813583%2Ezip> [retrieved on 20181106]
- FRAUNHOFER IIS; FRAUNHOFER HHI: "NR beam management supporting multi gNB measurements for positioning", 3GPP TSG RAN WG1 MEETING #95, R1-1813583, 2 November 2018 (2018-11-02), Spokane, US, XP051479922, Retrieved from the Internet <URL:https://www.3gpp.org/ftp/tsg_ran/WG1_RL1/TSGR1_95/Docs/R1-1813583.zip> [retrieved on 20201007]
- QUALCOMM INC.: "On Demand Transmission of PRS for NR", 3GPP TSG-RAN WG2 MEETING #105, R2-1901373., 15 February 2019 (2019-02-15), Athens, Greece, XP051602732, Retrieved from the Internet <URL:https://www.3gpp.org/ftp/tsg_ran/WG2_RL2/TSGR2_105/Docs/R2-1901373.zip> [retrieved on 20201006]

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for positioning-specific beam refinement for neighbor cell positioning reference signal (PRS) transmission in communications systems, such as NR.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR may provide bitrates on the order of 10-20 Gbit/s or higher, and may support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.

US20160337916 discloses systems, methods, and instrumentalities for a wireless transmit/receive unit (WTRU) comprising a processor configured to receive a set of gap patterns, and measurement activities associated therewith, wherein each of the gap patterns includes an identifier for the measurement activity to be performed, and measure a signal pursuant to at least one of the gap patterns to obtain a measurement.

Frauhofer Iis et al. "NR beam management supporting multi-gNB measurements for positioning", 3rd generation partnership project, 3GPP, draft; R1-1813583, XP051479922, discloses proposals for NR beam management supporting multi-gNB measurements for positioning. The contribution proposes how to enable necessary measurements on reference signals used for positioning that are transmitted or received within highly directional beams from or at different locations.

### SUMMARY:

According to some aspects, there is provided the subject matter of the independent claims. Some further aspects are defined in the dependent claims.

### BRIEF DESCRIPTION OF THE DRAWINGS:

For proper understanding of example embodiments, reference should be made to the accompanying drawings, wherein:
Fig. 1 illustrates an example of a time-frequency mapping of downlink reference signals, according to some embodiments described herein;
Fig. 2 illustrates an example of dynamic and on-demand PRS using beam refinement in neighboring cells, according to some embodiments described herein;
Fig. 3a illustrates an example flow diagram of a method, according to some embodiments described herein;
Fig. 3b illustrates an example flow diagram of a method, according to some embodiments described herein;
Fig. 3c illustrates an example flow diagram of a method, according to some embodiments described herein;
Fig. 4 illustrates an example signaling diagram of a procedure, according to some embodiments described herein;
Fig. 5 illustrates an example signaling diagram of a procedure, according to some embodiments described herein;
Fig. 6a illustrates an example block diagram of an apparatus, according to an embodiment; and
Fig. 6b illustrates an example block diagram of an apparatus, according to another embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for positioning-specific beam refinement for neighbor cell positioning reference signal (PRS) transmission, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments. In addition, the phrase "set of" refers to a set that includes one or more of the referenced set members. As such, the phrases "set of," "one or more of," and "at least one of," or equivalent phrases, may be used interchangeably. Further, "or" is intended to mean "and/or," unless explicitly stated otherwise.

Additionally, if desired, the different functions or steps discussed below may be performed in a different order and/or concurrently with each other. Furthermore, if desired, one or more of the described functions or steps may be optional or may be combined. As such, the following description should be considered as merely illustrative of the principles and teachings of certain example embodiments, and not in limitation thereof.

In New Radio (NR), one element that differentiates the transmission of PRS with respect to LTE is that beamforming is involved. This may particularly apply to Frequency Range 2 (FR2), where a large number of beams is anticipated to be transmitted per cell and/or transmission point. As a result, the transmission of PRS in NR is not a straightforward extension of LTE. Currently, there are ongoing discussions with respect to how PRSs are transmitted in beamforming transmissions.

In NR, a UE may continuously perform at least intra-frequency radio resource management (RRM) measurements. The UE may additionally be configured to perform RRM measurements on other layers or radio access technologies (RATs). In general, mobility measurements are for inter-cell mobility and may be referred to as RRM measurements or Layer 3 mobility. For inter-cell mobility, radio resource control (RRC) signalling is usually involved. RRC may also be used for configuring measurements for synchronization signal and physical broadcast channel block (SSB)-based or channel state information reference signal (CSI-RS)-based beam management and for L1-reference signal received power (RSRP) measurements. Reference signals used for L3 mobility and/or beam management may be explicitly configured. RRM measurements may be configured for a UE by a network using the *MeasObjectNR* information element (IE). The IE *MeasObjectNR* specifies information applicable for SSB intra/inter-frequency measurements or CSI-RS intra/inter-frequency measurements.

The CSI-RS signals for beam management purposes and L3 mobility purposes may be separately configured (i.e., the actual signals, measurements, and reporting configurations are independent configurations). For beam management purposes, a UE may be configured with one or more non-zero power CSI-RS (NZP-CSI-RS) configurations. For L3 mobility purposes, the UE may be configured with CSI-RS for mobility.

Also, the SSB signals can be used for both beam management and L3 mobility. SSB-based measurements for beam management and the SSB resources to be used for L1-RSRP reporting may be explicitly configured. In current specifications, the SSB-based measurements for L3 mobility are performed by the UE during the SS block-based RRM measurement timing configuration (SMTC) window. The SMTC window determines the time duration where the UE can expect SSB time locations and where the UE performs measurements of any SSBs of any cell on a frequency layer.

Positioning methods deployed over FR2 systems may have at least the problem of hearability of PRSs. This problem can be addressed with proper beam refinement procedures, where the PRSs are sent into "narrow" CSI-RS beams towards a UE. However, such a beam refinement procedure is currently only possible for the serving cell via beam management procedures. In addition, another important aspect relates to a dynamic and on-demand allocation of PRS resources in FR2 systems. In particular, due to the beam sweeping process, a fixed allocation of PRSs to beams could lead to an inefficient and wasteful use of computing or processing resources of a transmitting device and an inefficient and wasteful use of network resources, such as time-frequency resources (e.g., time resources and/or frequency resources). This is because a large number of PRSs would have to be transmitted in many directions (i.e., in the corresponding CSI-RS beam directions), without ensuring that there are UE receivers in those directions.

To solve this issue, the concepts of dynamic and on-demand PRS transmission have been proposed. Dynamic and on-demand PRS imply that the resources allocated for a PRS transmission are adjusted (e.g., either increased or decreased), depending on given accuracy requirements. In addition, in cases where there are no UEs associated with a positioning service in an area, on-demand PRS would imply that no PRSs are transmitted to that particular area.

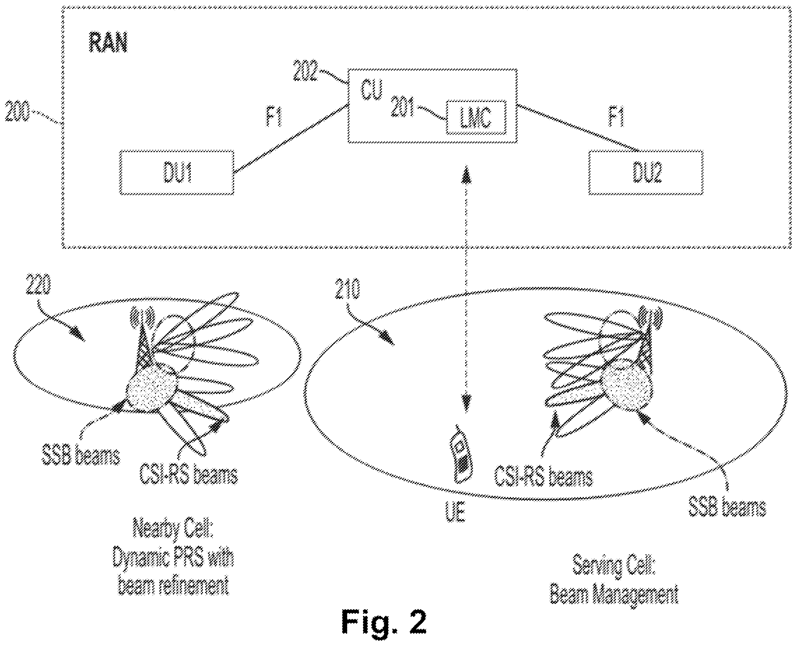

However, in order to be able to apply dynamic and on-demand PRSs on neighboring cells or nearby cells (e.g., cells that are different than a serving cell in which a UE is located and that may be within communicative range of the UE), beam refinement may be needed to account for sufficient hearability of neighboring cells. This is because the UEs can only detect SSB signalling from non-serving neighboring cells, and such SSB signalling is transmitted in respective SSB beams, which are typically wider than CSI-RS beams and thus cannot reach as far of a distance as CSI-RS beams and/or cannot reach a UE with as much strength as the CSI-RS beams, as illustrated in Fig. 2 described below. Extending this beam refinement process to neighboring cells (other than the serving cell) is difficult. This is because there is no RRC connection between a UE and the neighboring cells, (i.e., the UE cannot simply exchange messages with neighboring cells in order to identify to which CSI-RS beams a PRS should be transmitted).

Some embodiments described herein provide for applying beam refinement to neighboring cells for PRS transmission purposes (e.g., for RS hearability for OTDOA, for other-cell angle-of-departure applications, for multi-cell round-trip time (RTT) applications, and/or the like). For example, some embodiments described herein provide for beam refinement in neighboring (or nearby) cells used for dynamic and/or on-demand PRS transmission for positioning purposes. In one embodiment, a method may be deployed for identifying whether an SSB beam (or a CSI-RS beam) from a non-serving cell (e.g., a neighboring or nearby cell) is sufficient for transmitting a PRS, and if not, whether an additional operation can be performed to increase the hearability of a PRS via beam refinement (i.e., from an SSB beam to a CSI-RS beam). According to certain embodiments, the method may apply a dual-level threshold, corresponding to whether an SSB beam is sufficient to be used as is and whether an SSB beam is detectable, yet not strong enough, such that a refined CSI-RS beam needs to be used within the coverage area of that SSB beam. Moreover, in an embodiment, the method may specify corresponding signalling exchange procedures between network entities.

Some embodiments described herein can reduce sweeping overhead of network entities (e.g., by reducing an amount of PRS that a network needs to transmit to a UE), thereby conserving computing and/or processing resources of the network entities. In addition, some embodiments described herein can reduce or eliminate inefficient and wasteful use of computing or processing resources of a transmitting device and inefficient and wasteful use of network resources that would otherwise occur, as described above. Further, some embodiments described herein extend beam refinement to cells other than a serving cell, thereby providing network entities with capabilities that the network entities could not previously perform. Further, some embodiments can improve a measurement accuracy when a UE can detect a neighboring (or nearby) cell (e.g., by adding beamforming gain to a CSI-RS or PRS for improved detection).

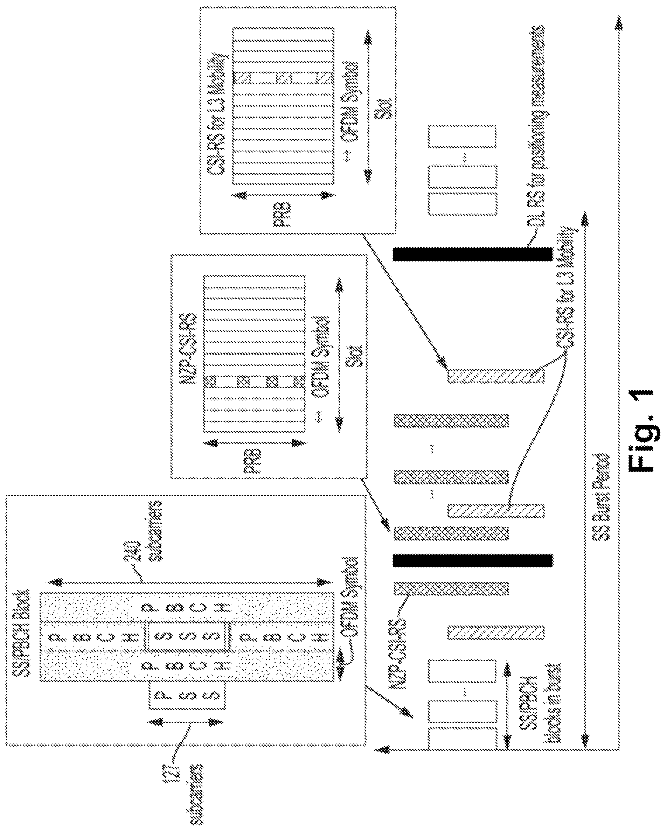

Fig. 1 illustrates an example of a time-frequency mapping of downlink reference signals, according to some embodiments described herein. Fig. 1 illustrates an example of SS/PBCH or SSB, CSI-RS (NZP-CSI-RS) for beam management, L3 Mobility CSI-RS signals in a time-frequency grid. CSI-RS for L3 mobility may be used for performing L3/RRC/Cell mobility measurements where as NZP-CSI-RS may be used for serving cell beam management. SSB measurements may be used for beam management purposes (e.g., L1-RSRP) or for L3 mobility purposes. Downlink reference signals may be used for positioning measurement (e.g., PRSs). As described above, Fig. 1 is provided as an example. Embodiments are not limited to the example of Fig. 1.

Fig. 2 illustrates an example of dynamic and on-demand PRS using beam refinement in neighboring cells, according to some embodiments described herein. As shown in Fig. 2, a location management component (LMC) 201 is assumed to be available at the RAN, which carries out the location management functionalities, and such LMC may be co-located with a central unit (CU) 202 of a RAN 200. As further shown in Fig. 2, a UE may be associated with a serving cell 210, which is associated with beam management. A neighboring (or nearby cell) 220 is a cell to which dynamic and/or on-demand PRS using beam refinement may be extended, as described elsewhere herein. For example, the UE may perform an example method described below. As described above, Fig. 2 is provided as an example. Embodiments are not limited to the example of Fig. 2. For example, although Fig. 2 shows, and is described with respect to, use of a LMC, Fig. 2, and the described embodiments, may apply equally to using a location management function (LMF) at the core network or other entity in place of the LMC.

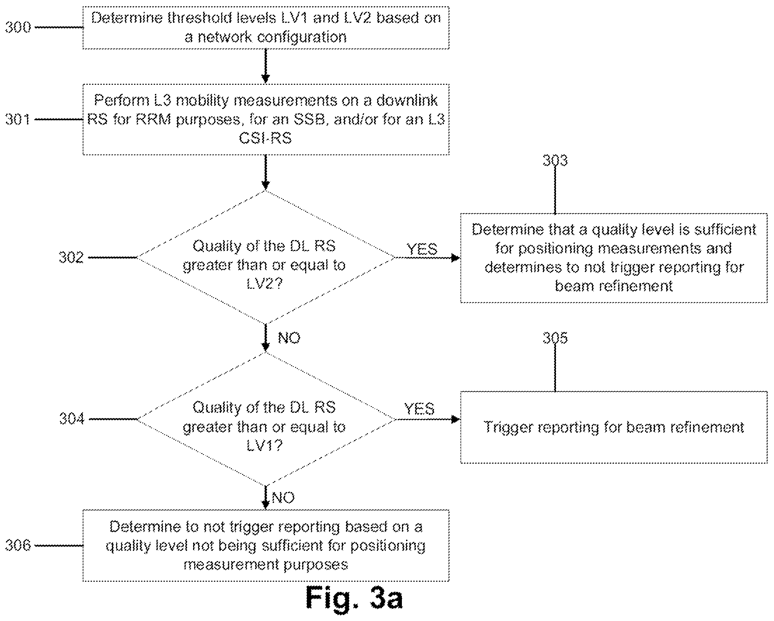

Fig. 3a illustrates an example flow diagram of a method, according to some embodiments described herein. Fig. 3a shows a flow chart of a downlink (DL) reference signal (RS) selection procedure for beam refinement request for positioning purposes, according to an embodiment. For example, the flow chart of Fig. 3a includes example operations that may be performed for implementing a beam refinement process for positioning purposes. During the method, a UE may apply beam refinement for a serving cell using a beam management procedure. The method may include use of a dual-level threshold to indicate a feasible downlink (DL) reference signal (RS) from a positioning perspective for serving and/or neighboring cells. The method may be applied for a serving cell (in a single or multiple transmit receive point (TRP) deployment), for neighboring (or nearby cells), or for both neighboring and serving cells.

As shown in Fig. 3a at 300, the method may include a UE determining threshold levels LV1 and LV2 based on a network configuration. For example, LV1 and LV2 may be the dual thresholds described elsewhere herein. Other embodiments may include use of a single threshold or more than two thresholds.

The network configuration may include configuration signaling provided from a base station (BS) to the UE via RRC signaling, signaling with an LMC entity, or a combination of RRC signaling and signaling with an LMC entity. In some embodiments, one of the threshold levels can be derived from another of the threshold levels. For example, the LV1 value can be derived based on the value of LV2 (i.e., there can be a fixed offset between LV1 and LV2). The offset value (e.g., 3 decibels (dB), 6dB, etc.) between LV1 and LV2 may be explicitly signalled from the network. When the dual threshold is not signalled by the network (e.g., when LV2 is not provided by the network) or when a LMC or LMF detects that latency requirements are strict (e.g., as in the case where a dual threshold is not signalled), the UE may not trigger a beam refinement request, as described elsewhere herein.

In an embodiment, the method may include, at 301, a UE performing L3 mobility measurements on a downlink RS for RRM purposes, for an SSB, and/or for an L3 CSI-RS. For example, the UE may perform L3 mobility measurements on the downlink RS after determining the threshold levels LV1 and LV2. In some embodiments, the UE may receive, from a network node, a request to measure a beam associated with a non-serving cell in association with determining the threshold levels and/or prior to performing the L3 mobility measurements.

The UE may compare corresponding quality levels (e.g., RSRPs) of SSB beams (or CSI-RSs for L3 mobility) from a non-serving cell (e.g., a neighboring or nearby cell) with the dual-level threshold. For example, the dual-level threshold may include LV1 and LV2, where LV1 is less than LV2.

In an embodiment, at 302, the method may include the UE determining whether a quality of the DL RS is greater than or equal to LV2. If, for example, a received RSRP value from an SSB beam of a nearby cell is greater than (or greater than or equal to, in some embodiments) the LV2 level, then, at 303, the method may include the UE determining that a quality level is sufficient for positioning measurements and determining to not trigger reporting for beam refinement. In this case, the SSB is identified and may be optionally reported as a candidate beam for positioning measurements of the UE. That is, no beam-refinement may be needed in this case where performing positioning-specific measurements can be performed with sufficient quality based on a quality level of a received beam. Additionally, in this case, the UE may perform the positioning-specific measurements.

In an embodiment, at 304, the method may include the UE determining whether a quality of the DL RS is greater than or equal to LV1. If, for example, the received RSRP value from the SSB beam of a nearby cell is less than LV2 (or less than or equal to, in some embodiments), and greater than (or greater than or equal to, in some embodiments) LV1, then, at 305, the method may include the UE triggering reporting for beam refinement (and/or providing a beam refinement request, as described elsewhere herein). In this case, the UE may determine that a nearby cell is within proximity of the UE but that the provided signal (e.g., the SSB signal) cannot be detected with sufficient quality and beam refinement may be triggered.

In some embodiments, when the method includes the UE triggering reporting for beam refinement, the UE may report a result of the above described comparison to the network. If a reporting to enable beam refinement with a nearby cell or cells is triggered, the UE may report a difference (e.g., a delta value) between a measured value of a beam and LV2. Additionally, or alternatively, the UE may report an absolute RSRP value of the SSB (or CSI-RS) below LV2 and/or an absolute RSRP value above LV1. This provides an indication to the network regarding how much signaling boost is needed by means of beam refinement.

The report transmitted from the UE to the network may include at least one of a beam index of a measured beam (e.g., an SSB index for an SSB beam), a physical layer cell identifier (PCI) of the non-serving cell, the delta value, and/or the like. In some embodiments, the UE may be configured to report at most N SSBs (or CSI-RSs), M cells, and/or the like per report, depending on a configuration of the reporting. Such report may be provided, by the UE, to an LMC located at a RAN. The LMC may be assumed to represent the RAN network element that carries out the location management functionalities. In some embodiments, the LMC may be located at the CU (see Fig. 2), which is then connected to the DUs via an F1 interface.

Based on the report enabling beam refinement from the UE, the LMC may trigger measurement and reporting configuration of L3 mobility CSI-RS. Such reporting configuration may differ from RRM. For example, the UE may not evaluate these measurements for L3 mobility-related events.

In some embodiments, the reporting configuration may specify a measurement window, which is valid for *N* measurement periods (or *N* CSI-RS periods) or for which the reporting configuration is valid. The reporting of the CSI-RS for L3 mobility can be configured to be reported in an aperiodic manner, a semi-persistent manner, and/or a periodic manner.

In embodiments where the UE measures CSI-RS beams, the UE may further report beam measurements greater than (or greater than or equal to, in some embodiments) LV1. As a result, the LMC may configure PRSs on the CSI-RS beams, which may be more narrow and/or have higher beam gain. The PRSs may be associated with specific CSI-RSs to allow the UE to determine a receive (Rx) direction of the PRSs based on the CSI-RSs. After a CSI-RS has been reported, the corresponding PRS would be associated with an SSB if the CSI-RS is no longer transmitted. This reduces the network sweeping overhead and the UE could still use the SSB as a spatial reference for receiving a PRS (e.g., the UE may be capable of determining how to set, directionally, an Rx beam to receive the PRS).

Alternatively, based on receiving the report enabling beam refinement or the CSI-RS measurement report from the UE, the BS (e.g., gNB) may perform an aperiodic sweep, a semi-persistent sweep, and/or a periodic sweep of a PRS that is associated with an SSB (and/or may provide quasi-collocation (QCL) association for FR2) or with an already reported CSI-RS for L3 mobility (e.g., the UE may have a normal RRM measurement configuration for a CSI-RS). In this case, the UE may be capable of determining the PRS sweep specific for a cell, a TRP of a cell, and/or a reference signal of a cell and/or a TRP.

In some embodiments, neighbor cell refinement and serving cell refinement may be performed separately or in parallel. The dual-threshold reporting described above can include the serving cell SSB, a CSI-RS, and/or a CSI-RS for L3 Mobility. For example, and from a beam management point of view, a low quality SSB may not be used as a source RS for beam refinement, but the low quality SSB may be used for positioning measurement. Specifically, as one example, the UE can be configured to perform positioning-specific serving cell and/or neighbor cell beam reporting (e.g., RRC-level reporting of an SSB index and/or of an L3 Mobility CSI-RS, and RSRP using the dual-threshold condition described above). In some cases, the RSRP value may be optional.

In some embodiments, the UE can be configured to perform positioning-specific serving cell and/or neighbor cell beam reporting (e.g., location management function (LMF)-level reporting of an SSB index and/or of an L3 Mobility CSI-RS, and RSRP) using the dual threshold condition. In some case the RSRP value may be optional. For example, the beam reporting may be performed using a media access control control element (MAC CE) or uplink control information (UCI) on a physical uplink shared channel (PUSCH) or a physical uplink control channel (PUCCH) (e.g., the beam reporting may be L1 or L2 signaling). Some embodiments may provide serving cell information using RRC-level reporting or LMC reporting. If L1 signaling or L2 signaling is used to report neighboring cell measurements, a PCI may be included in the report for the neighboring cell.

As further illustrated in Fig. 3a at 306, if the UE determines that the quality of the DL RS is less than (or less than or equal to, in some embodiments) LV1 and LV2, then the method may include the UE determining to not trigger reporting based on a quality level of the DL RS not being sufficient for positioning measurement purposes. In this case, beam refinement may not be used.

As described above, Fig. 3a is provided as an example. Embodiments are not limited to the example of Fig. 3a. For example, although Fig. 3a describes use of a LMC to perform various operations, the embodiments described with respect to Fig. 3a may use a LMF or other entity to perform the various operations.

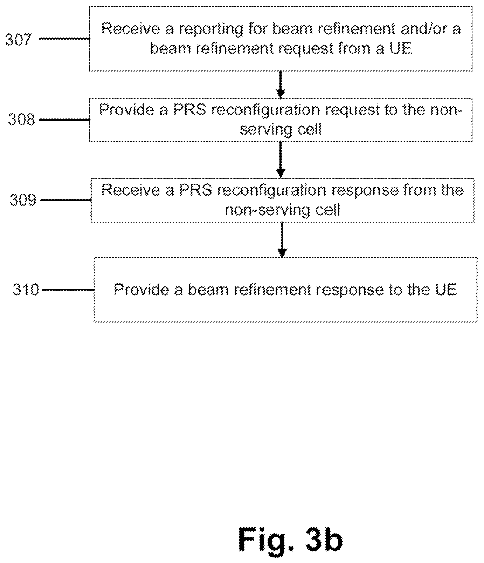

Fig. 3b illustrates an example flow diagram of a method, according to some embodiments described herein. For example, the method of Fig. 3b may be performed by one or more network entities, such as a serving cell or a LMF, with respect to implementing a beam refinement process for positioning purposes that is described with respect to Fig. 3a, according to an embodiment.

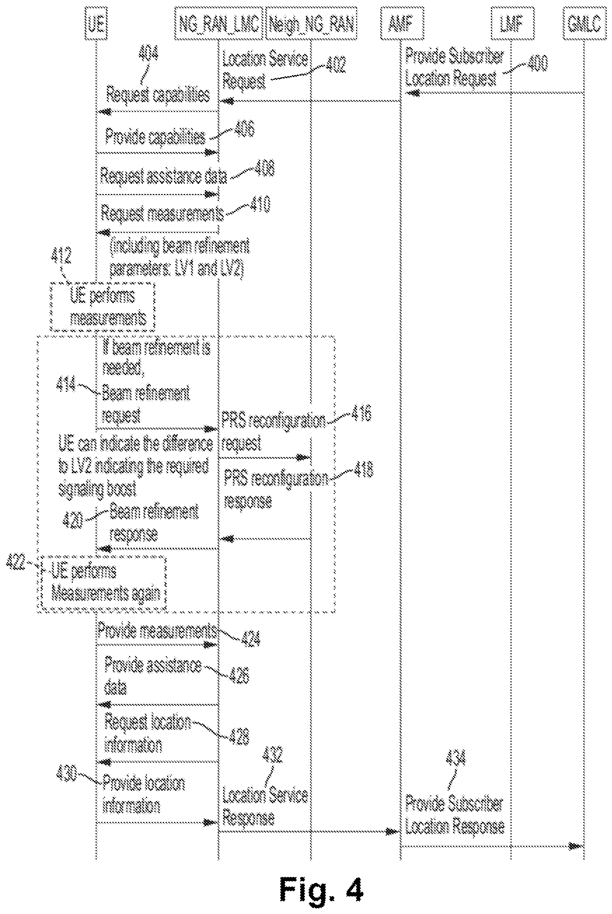

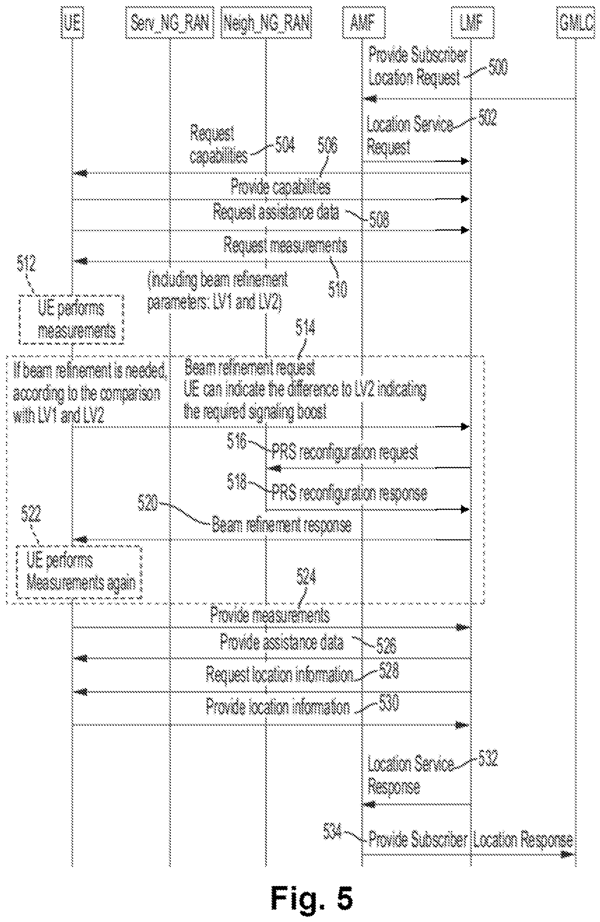

In an embodiment, the method may include, at 307, a serving cell or a LMF receiving a reporting for beam refinement and/or a beam refinement request from a UE. For example, the serving cell (if procedures similar to that shown in and described with respect to Fig. 4 are being performed) or the LMF (if procedures similar to that shown in and described with respect to Fig. 5 are being performed) may receive a reporting similar to that described with respect to Fig. 3a above and the beam refinement request may be similar to that described below with respect to procedures 414 or 514, depending on whether the serving cell or the LMF performs the receiving. In some embodiments, the serving cell or the LMF may alternatively receive a positioning measurement from the UE (e.g., when a result of a measurement described above with respect to procedure 301 satisfies LV2).

In some embodiments, prior to the serving cell or the LMF receiving a reporting and/or a beam refinement request, a non-serving cell may transmit SSB beams (or CSI-RSs for L3 mobility) to a UE. In some embodiments, if the UE is within range of the non-serving cell, then the UE may receive the SSB beams (or the CSI-RSs) and may perform one or more of procedures 300-306 described above. In addition, the serving cell or the LMF may provide, to the UE, a request to measure at least one beam associated with the non-serving cell (e.g., at least one SSB or CSI-RS that the non-serving cell transmits to the UE). In some embodiments, the request may be associated with causing the UE to perform a measurement of the at least one beam and to determine whether beam refinement is needed based on a comparison of the measurement result and multiple thresholds.

In an embodiment, at 308, the method may include the serving cell or the LMF providing a PRS reconfiguration request to the non-serving cell. For example, the serving cell or the LMF may provide a PRS reconfiguration request to the non-serving cell after receiving the reporting and/or the beam refinement request from the UE. In some embodiments, the serving cell or the LMF may provide the PRS reconfiguration request in a manner similar to that described below with respect to procedures 416 or 516, depending on whether the serving cell or the LMF performs the providing.

In an embodiment, at 309, the method may include the serving cell or the LMF receiving a PRS reconfiguration response from the non-serving cell. For example, the serving cell or the LMF may receive the PRS reconfiguration response in a manner similar to that described below with respect to procedures 418 or 518, depending on whether the serving cell or the LMF is performing the receiving.

In an embodiment, at 310, the method may include the serving cell or the LMF providing a beam refinement response to the UE. For example, the serving cell or the LMF may provide a beam refinement response to the UE in a manner similar to that described below with respect to procedures 420 or 520, depending on whether the serving cell or the LMF is performing the providing. In some embodiments, the UE may re-perform measurements based on receiving the beam refinement response, in a manner similar to that described below with respect to procedures 422 or 522.

As described above, Fig. 3b is provided as an example. Embodiments are not limited to the example of Fig. 3b.

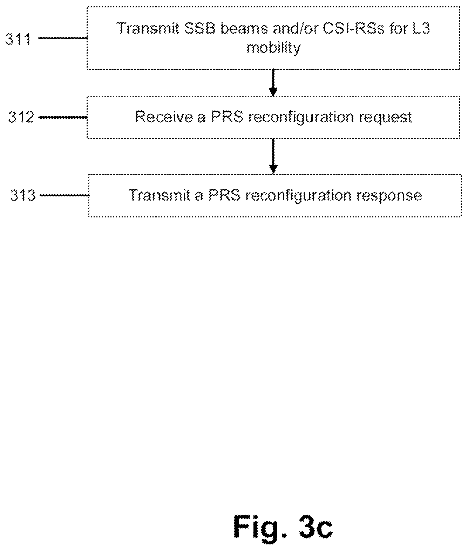

Fig. 3c illustrates an example flow diagram of a method, according to some embodiments described herein. For example, the method of Fig. 3c may be performed by one or more network entities, such as a neighboring cell, with respect to implementing a beam refinement process for positioning purposes that is described with respect to Fig. 3a, according to an embodiment.

In an embodiment, at 311, the method may include the neighboring cell transmitting SSB beams and/or CSI-RSs for L3 mobility. For example, the neighboring cell may transmit the SSB beams and/or the CSI-RSs to one or more UEs that are within range of the neighboring cell.

In an embodiment, at 312, the method may include the neighboring cell receiving a PRS reconfiguration request. For example, the neighboring cell may receive the PRS reconfiguration request when beam refinement of the SSB beams and/or the CSI-RSs is needed, as determined by the UE. In some embodiments, the neighboring cell may receive the PRS reconfiguration request from a serving cell (as described with respect to reference number 416 of Fig. 4) or from a LMF (as described with respect to reference number 516 of Fig. 5). In some embodiments, the neighboring cell may implement signaling boost for a transmission of the SSBs and/or the CSI-RSs based on receiving the PRS reconfiguration request and may re-transmit the SSBs and/or the CSI-RS after implementing the signaling boost.

In an embodiment, at 313, the method may include the neighboring cell transmitting a PRS reconfiguration response. For example, the neighboring cell may transmit the PRS reconfiguration response after implementing signaling boost and/or re-transmitting the SSBs and/or the CSI-RSs. In some embodiments, the neighboring cell may transmit the PRS reconfiguration response to a serving cell (as described with respect to reference number 418 of Fig. 4) or to a LMF (as described with respect to reference number 518 of Fig. 5).

As described above, Fig. 3c is provided as an example. Embodiments are not limited to the example of Fig. 3c.

Fig. 4 illustrates an example signaling diagram of a procedure, according to some embodiments described herein. For example, Fig. 4 shows use of Xn signaling (e.g., an Xn application protocol or signaling interface) between serving and neighboring cells. As shown in Fig. 4, the signaling diagram includes a UE (shown as "UE"), a next generation RAN LMC (shown as "NG_RAN_LMC"), a neighboring next generation RAN cell (shown as "Neigh_NG_RAN"), an access and mobility management function (shown as "AMF"), a location management function (shown as "LMF"), and a gateway mobile location center ("GMLC") as various network entities.

As shown at 400, the GMLC may provide a subscriber location request to the AMF. For example, the subscriber location request may be a request for location-related information for the UE. As shown at 402, the AMF may provide a location service request to the NG_RAN_LMC. For example, the AMF may provide the location service request after receiving the subscriber location request from the GMLC.

As shown at 404, the NG_RAN_LMC may request capabilities from the UE. For example, the NG_RAN_LMC may request the capabilities from the UE after receiving the location service request from the AMF. The capabilities may relate to an ability of the UE to perform beam refinement for neighboring cells in the manner described herein. As shown at 406, the UE may provide the capabilities to the NG_RAN_LMC. For example, the UE may provide information that identifies whether the UE has one or more particular capabilities.

As shown at 408, the UE may request assistance data from the NG_RAN_LMC. For example, the assistance data may be related to determining reference points for positioning measurements or for UE assistance measurements. As shown at 410, the NG_RAN_LMC may request measurements from the UE. For example, the NG_RAN_LMC may request measurements of an SSB and/or a CSI-RS, as described elsewhere herein. In addition to requesting measurements, the NG_RAN_LMC may provide configurations for one or more thresholds to be used in association with performing measurements (e.g., LV1 and LV2 described above) and/or other beam refinement parameters. One or more conditions may control initiation of sending the configurations for the one or more thresholds. For example, and as described elsewhere herein, in example embodiments, the configurations for the one or more thresholds may only be sent if latency requirements are not too strict (e.g., whether a low latency application is involved, such as an application that requires a short response time for positioning purposes (e.g., less than 30 ms), which may include, for example, applications related to autonomous operation of vehicles). In other words, in example embodiments, sending the configurations may only be initiated if the resulting latency permits such operations. In some embodiments, latency requirements described herein may be implemented according to Third Generation Partnership Project (3GPP) TS 23.273 (e.g., may be communicated according to the procedure shown in Figure 6.1.2-1) and TS 22.872 (e.g., may utilize the use case values shown in Table 6.1-1).

As shown at 412, the UE may perform measurements of one or more beams. For example, the UE may perform measurements of one or more beams of a neighboring cell, and may perform a comparison of the measurements to one or more thresholds, as described elsewhere herein. In addition, the UE may determine whether beam refinement is needed based on a result of the comparison. As shown at 414, if beam refinement is needed, based on a result of the comparison, the UE may provide a beam refinement request to the NG_RAN_LMC. For example, the beam refinement request may include a request to boost signaling for one or more beams. Specifically, the beam refinement request may include information that indicates a difference between a measurement made by the UE and LV2 to indicate a required signaling boost.

As shown at 416, the NG_RAN_LMC may provide a PRS reconfiguration request to the Neigh_NG_RAN. For example, the NG_RAN_LMC may provide the PRS reconfiguration request to the Neigh_NG_RAN to cause the Neigh_NG_RAN to implement the signaling boost. As shown at 418, the Neigh_NG_RAN may provide a PRS reconfiguration response to the NG_RAN_LMC. For example, the PRS reconfiguration response may indicate to the NG_RAN_LMC that the signaling boost has been implemented and/or a value for the signaling boost.

As shown at 420, the NG_RAN_LMC may provide a beam refinement response to the UE. For example, the beam refinement response may indicate that the signaling boost has been implemented by the Neigh_NG_RAN and/or an amount of the signaling boost. As shown at 422, the UE may perform measurements again, in a manner similar to that described with respect to procedure 412 above.

As shown at 424, the UE may provide the measurements to the NG_RAN_LMC. For example, the UE may provide information that identifies a result of performing the measurements after triggering reporting, in a manner similar to that described elsewhere herein. As shown at 426, the NG_RAN_LMC may provide the assistance data to the UE. For example, the assistance data may be PRS assistance data. In some embodiments, the NG_RAN_LMC may provide information that identifies which beam identifiers and cell identifiers convey the PRS data that is relevant to the UE. It is noted that the PRS signals are in principle not restricted to be measured by just a single UE. For instance, if nearby UEs are requesting a positioning service, then the NG_RAN_LMC may provide PRS assistance data to that UE, and such information can be partially or entirely the same.

As shown at 428, the NG_RAN_LMC may request location information from the UE. For example, a request location information message may be a LTE positioning protocol (LPP) message that is used to request positioning measurements or a position estimate from the target device (e.g., the UE). As shown at 430, the UE may provide the location information to the NG_RAN_LMC. For example, the UE may provide the PRS measurements to the NG_RAN_LMC. Continuing with the previous example, the UE may report the reference signal time difference (RSTD) values between PRS transmissions, using the PRS transmissions on the indicated or configured beams and cells. A provide location information message may be a LPP message used by the target device (e.g., the UE) to provide positioning measurements or position estimates. As shown at 432, the NG_RAN_LMC may provide a location service response to the AMF. For example, the location service response may identify a location of the UE, the PRS measurements, and/or the like. As shown at 434, the AMF may provide a subscriber location response to the GMLC. For example, the subscriber location response may identify a location of the UE, the PRS measurements, and/or the like.

As described above, Fig. 4 is provided as an example. Embodiments are not limited to the example of Fig. 4.

Fig. 5 illustrates an example signaling diagram of a procedure, according to some embodiments described herein. For example, Fig. 5 shows use of LMF-based signaling for a beam refinement procedure, according to an embodiment. As shown in Fig. 5, the signaling diagram includes a UE (shown as "UE"), a serving next generation RAN (shown as "Serv_NG_RAN"), a neighboring next generation RAN cell (shown as "Neigh_NG_RAN"), an access and mobility management function (shown as "AMF"), a location management function (shown as "LMF"), and a gateway mobile location center (shown as "GMLC") as various network entities.

Procedures 500 through 510 of Fig. 5 show operations that are similar to that described with respect to reference numbers 400 through 410 of Fig. 4, except that some of the operations shown with respect to procedures 500 through 510 include use of the LMF rather than the NG_RAN_LMC. As shown at 512, the UE may perform measurements of one or more beams. For example, the UE may perform measurements in a manner similar to that described with respect to Fig. 4. As shown at 514, if a beam refinement is needed, based on a result of a comparison, the UE may provide a beam refinement request to the LMF.

As shown at 516, the LMF may provide a PRS reconfiguration request to the Neigh_NG_RAN. At 518, the Neigh_NG_RAN may provide a PRS reconfiguration response to the LMF. As shown at 520, the LMF may provide a beam refinement response to the UE. As shown at 522, the UE may perform measurements again, in a manner similar to that described with respect to procedure 512 above. Operations 524 through 534 show operations that are similar to that described with respect to operations 424 through 434 of Fig. 4, except that some of the operations shown with respect to references numbers 524 through 534 include use of the LMF rather than the NG_RAN_LMC.

As described above, Fig. 5 is provided as an example. Embodiments are not limited to the example of Fig. 5.

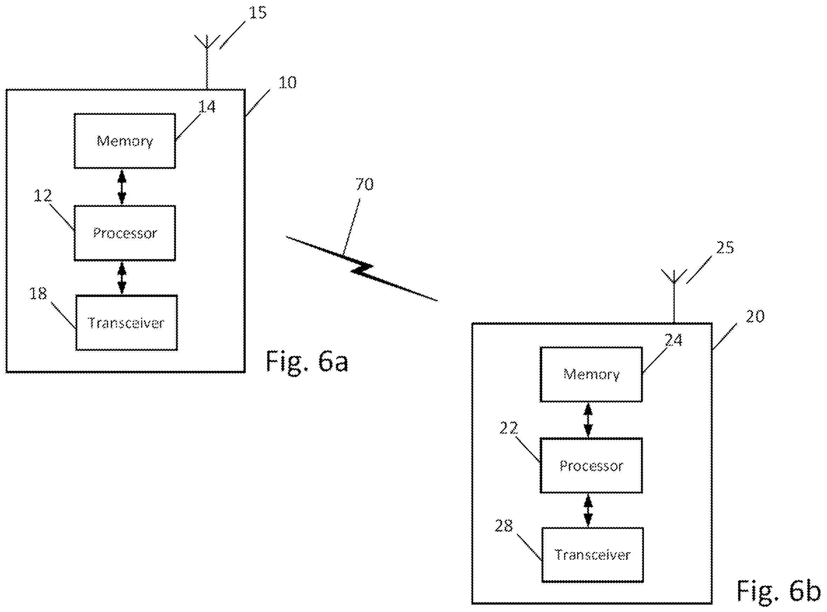

Fig. 6a illustrates an example of an apparatus 10 according to an embodiment. In an embodiment, apparatus 10 may be a node, host, or server in a communications network or serving such a network. For example, apparatus 10 may be a network node, satellite, base station, a Node B, an evolved Node B (eNB), 5G Node B or access point, next generation Node B (NG-NB or gNB), and/or a WLAN access point, associated with a radio access network, such as a LTE network, 5G or NR. In example embodiments, apparatus 10 may be an eNB in LTE or gNB in 5G. In another embodiment, apparatus 10 may be or may be included in a location server, such as LMF in NR. Additionally, or alternatively, apparatus 10 may be the NG_RAN_LMC, the Neigh_NG_RAN, the Serv_NG_RAN, the AMF, the LMF, and/or the GMLC of Figs. 4 and 5.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 6a.

As illustrated in the example of Fig. 6a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 6a, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like and may include an LMC. In another embodiment, apparatus 10 may be a location server, such as an LMF.

According to certain embodiments, apparatus 10 may be controlled by memory 14 and processor 12 to perform the functions associated with any of the embodiments described herein, such as some operations of flow or signaling diagrams illustrated in Figs. 3, 4, and 5.

For instance, in one embodiment, apparatus 10 may be controlled by memory 14 and processor 12 to provide, to a UE, a request to measure at least one beam associated with a non-serving cell. For example, the request may be associated with causing the UE to perform a measurement of the at least one beam and to determine whether beam refinement is needed based on a comparison of the measurement and multiple thresholds. In an embodiment, apparatus 10 may be controlled by memory 14 and processor 12 to receive, based on whether the measurement satisfies one or more of the multiple thresholds, at least one of: a positioning measurement or a reporting for beam refinement.

In an embodiment, apparatus 10 may be controlled by memory 14 and processor 12 to provide, prior to providing the request, a network configuration for the multiple thresholds. In an embodiment, apparatus 10 may be controlled by memory 14 and processor 12 to determine, prior to providing the network configuration, whether a positioning application, associated with performing the measurement, allows for latency caused by additional signaling associated with the beam refinement, and providing the network configuration depending on whether the positioning application allows for the latency. In an embodiment, apparatus 10 may be controlled by memory 14 and processor 12 to receive the reporting for the beam refinement based on the measurement failing to satisfy a first threshold and satisfying a second threshold. In an embodiment, apparatus 10 may be controlled by memory 14 and processor 12 to receive, from the UE, a beam refinement request based on the reporting for beam refinement being triggered, and providing, to the UE, a beam refinement response to the beam refinement request.

In an embodiment, apparatus 10 may be controlled by memory 14 and processor 12 to provide a measurement and reporting configuration to the UE based on receiving the reporting for beam refinement. In an embodiment, apparatus 10 may be controlled by memory 14 and processor 12 to perform a PRS sweep based on receiving the reporting.

In an embodiment, apparatus 10 may be controlled by memory 14 and processor 12 to transmit at least one beam to a UE. In an embodiment, apparatus 10 may be controlled by memory 14 and processor 12 to receive, from a network entity, a reconfiguration request after transmitting the at least one beam, where the reconfiguration request may be associated with causing apparatus 10 to implement a signaling boost with respect to the at least one beam. In an embodiment, apparatus 10 may be controlled by memory 14 and processor 12 to transmit, to the network entity, a reconfiguration response after receiving the reconfiguration request.

In an embodiment, apparatus 10 may be controlled by memory 14 and processor 12 to implement the signaling boost with respect to the at least one beam. In an embodiment, apparatus 10 may be controlled by memory 14 and processor 12 to re-transmit the at least one beam after implementing the signaling boost.

Fig. 6b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 6b.

As illustrated in the example of Fig. 6b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 6b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as those illustrated in Figs. 3, 4, or 5.

According to some embodiments, apparatus 20 may be controlled by memory 24 and processor 22 to receive, from a network node, a request to measure at least one beam associated with a non-serving cell. For example, the request may be associated with causing the UE to perform a measurement of the at least one beam and to determine whether beam refinement is needed based on a comparison of the measurement and multiple thresholds. In an embodiment, apparatus 20 may be controlled by memory 24 and processor 22 to perform, based on whether the measurement satisfies one or more of the multiple thresholds, one of: performing a positioning measurement, triggering reporting for beam refinement, or determining to not trigger the reporting for beam refinement.

In an embodiment, apparatus 20 may be controlled by memory 24 and processor 22 to determine, prior to receiving the request, the multiple thresholds based on a network configuration. In an embodiment, apparatus 20 may be controlled by memory 24 and processor 22 to perform the measurement on an SSB, a CSI-RS, or a CSI-RS for L3 mobility management. In an embodiment, apparatus 20 may be controlled by memory 24 and processor 22 to perform a comparison of the measurement to a first threshold and performing the positioning measurement based on the measurement satisfying the first threshold. In an embodiment, apparatus 20 may be controlled by memory 24 and processor 22 to performing a comparison of the measurement to a second threshold based on the measurement failing to satisfy a first threshold and triggering the reporting for the beam refinement based on the measurement satisfying the second threshold.

In an embodiment, apparatus 20 may be controlled by memory 24 and processor 22 to perform a comparison of the measurement to perform a comparison of the measurement to the multiple thresholds and determining to not trigger the reporting for the beam refinement based on the measurement failing to satisfy the multiple thresholds. In an embodiment, apparatus 20 may be controlled by memory 24 and processor 22 to determine, prior to performing the comparison to the multiple thresholds, whether a positioning application, associated with performing the positioning measurement, allows for latency caused by additional signaling associated with the beam refinement, and perform the comparison depending on whether the positioning application allows for the latency. In an embodiment, apparatus 20 may be controlled by memory 24 and processor 22 to provide, to the network node, a beam refinement request based on triggering the reporting for beam refinement, and receive, from the network node, a beam refinement response to the beam refinement request.

In an embodiment, apparatus 20 may be controlled by memory 24 and processor 22 to receive a measurement and reporting configuration from the network node via a radio access node based on triggering the reporting. In an embodiment, apparatus 20 may be controlled by memory 24 and processor 22 to determining a receive (Rx) direction for a PRS sweep based on triggering the reporting.

Therefore, certain example embodiments provide several technological improvements, enhancements, and/or advantages over existing technological processes. For example, one benefit of some example embodiments is a reduction in sweeping overhead of network nodes, thereby conserving computing and/or processing resources of the network nodes. As another example, one benefit of some example embodiments is a reduction or elimination of inefficient and wasteful uses of computing or processing resources of a transmitting device and of network resources that would otherwise occur without one or more of the embodiments described herein. As another example, one benefit of some example embodiments is extension of beam refinement to cells other than a serving cell, which provides network nodes with capabilities that the network nodes could not previously perform. Accordingly, the use of some example embodiments results in improved functioning of communications networks and their nodes and, therefore constitute an improvement at least to the technological field of wireless control and management, among others.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations required for implementing functionality of an example embodiment may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein apply equally to both singular and plural implementations, regardless of whether singular or plural language is used in connection with describing certain embodiments. For example, an embodiment that describes operations of a single network node equally applies to embodiments that include multiple instances of the network node, and vice versa.

One having ordinary skill in the art will readily understand that the example embodiments as discussed above may be practiced with steps in a different order, and/or with hardware elements in configurations which are different than those which are disclosed. For example, the embodiments described herein are not limited to inter-cell cases. The method of dual-level threshold can be used to indicate a feasible DL RS from a positioning perspective for a serving cell. In addition, some embodiments described herein can provide for requesting PRS on a particular beam when positioning is active.

## Claims

1. An apparatus (20), comprising:
means for receiving, from a network node, a request (410) to measure at least one beam associated with a non-serving cell, wherein the request is associated with causing the apparatus to perform (412) a measurement of the at least one beam and to determine whether beam refinement is needed based on a comparison of the measurement and multiple thresholds;
means for determining whether a positioning application, associated with performing a positioning measurement, allows for latency caused by additional signaling associated with the beam refinement;
means for performing, depending on whether the positioning application allows for the latency, the comparison of the measurement to the multiple thresholds;
means for determining (306) to not trigger reporting for beam refinement based on the measurement failing to satisfy the multiple thresholds.

2. The apparatus (20) according to claim 1, further comprising:
means for determining, prior to receiving the request, the multiple thresholds based on a network configuration.

3. The apparatus (20) according to claim 1 or 2, further comprising:
means for performing (301) the measurement on a synchronization signal and physical broadcast channel block, a channel state information reference signal, or a channel state information reference signal for layer 3 mobility management.

4. The apparatus (20) according to any preceding claim, further comprising:
means for performing (302) a comparison of the measurement to a first threshold; and
means for performing the positioning measurement based on the measurement satisfying the first threshold.

5. The apparatus (20) according to claim 4, further comprising:
means for performing (304) a comparison of the measurement to a second threshold based on the measurement failing to satisfy the first threshold; and
means for triggering (305) the reporting for the beam refinement based on the measurement satisfying the second threshold.

6. The apparatus (20) according to claim 5, wherein the first threshold of the multiple thresholds is based on a fixed offset from the second threshold of the multiple thresholds.

7. The apparatus (20) according to claim 5 or 6, further comprising:
means for providing, to the network node, a beam refinement request (414) based on triggering the reporting for beam refinement; and
means for receiving, from the network node, a beam refinement response (420) to the beam refinement request.

8. The apparatus (20) according to any of claims 5 to 7, further comprising: means for receiving a measurement and reporting configuration from the network node via a radio access node based on triggering the reporting.

9. The apparatus (20) according to any preceding claim, wherein the measurement is a measurement of reference signal quality level of the at least one beam.

10. The apparatus (20) according to any preceding claim, wherein the reporting includes information that identifies at least one of: a difference between the measurement with respect to quality level of the at least one beam and one or more of the multiple thresholds, an absolute value of the measurement with respect to one or more of the multiple thresholds, a synchronization signal and physical broadcast channel block index or a physical layer cell identifier of a cell associated with a network node of the non-serving cell.

11. A method, comprising:
receiving, by a user equipment (20) from a network node, a request (410) to measure at least one beam associated with a non-serving cell, wherein the request is associated with causing the user equipment to perform (412) a measurement of the at least one beam and to determine whether beam refinement is needed based on a comparison of the measurement and multiple thresholds;
determining whether a positioning application, associated with performing a positioning measurement, allows for latency caused by additional signaling associated with the beam refinement;
performing, depending on whether the positioning application allows for the latency, the comparison of the measurement to the multiple thresholds;
determining (306) to not trigger reporting for beam refinement based on the measurement failing to satisfy the multiple thresholds.

12. A non-transitory computer readable medium comprising program instructions
which, when executed by an apparatus (20), causes the apparatus to perform the method according to claim 11.

## Patentansprüche

1. Vorrichtung (20), die Folgendes umfasst:
Mittel zum Empfangen einer Anforderung (410) zum Messen von mindestens einem Strahl, der mit einer nicht bedienenden Zelle verknüpft ist, von einem Netzwerkknoten, wobei die Anforderung mit dem Veranlassen der Vorrichtung, eine Messung des mindestens einen Strahls durchzuführen (412) und auf Basis eines Vergleichs der Messung und mehrerer Schwellwerte zu bestimmen, ob eine Strahlverfeinerung erforderlich ist, verknüpft ist;
Mittel zum Bestimmen, ob eine Positionsbestimmungsanwendung, die mit dem Durchführen einer Positionsbestimmungsmessung verknüpft ist, eine Latenz zulässt, die durch zusätzliches Signalisieren veranlasst wird, das mit der Strahlverfeinerung verknüpft ist;
Mittel zum Durchführen des Vergleichs der Messung mit den mehreren Schwellwerten in Abhängigkeit davon, ob die Positionsbestimmungsanwendung die Latenz zulässt;
Mittel zum Bestimmen (306), kein Melden für eine Strahlverfeinerung auszulösen, darauf basierend, dass die Messung die mehreren Schwellwerte nicht erfüllt.

2. Vorrichtung (20) nach Anspruch 1, die ferner Folgendes umfasst:
Mittel zum Bestimmen der mehreren Schwellwerte vor Empfangen der Anforderung auf Basis einer Netzwerkauslegung.

3. Vorrichtung (20) nach Anspruch 1 oder 2, die ferner Folgendes umfasst:
Mittel zum Durchführen (301) der Messung an einem Synchronisationssignal- und physischen Broadcastkanalblock, einem Kanalzustandsinformationsreferenzsignal oder einem Kanalzustandsinformationsreferenzsignal für eine Schicht-3-Mobilitätsverwaltung.

4. Vorrichtung (20) nach einem der vorhergehenden Ansprüche, das ferner Folgendes umfasst:
Mittel zum Durchführen (302) eines Vergleichs der Messung mit einem ersten Schwellwert; und
Mittel zum Durchführen der Positionsbestimmungsmessung darauf basierend, dass die Messung den ersten Schwellwert erfüllt.

5. Vorrichtung (20) nach Anspruch 4, die ferner Folgendes umfasst:
Mittel zum Durchführen (304) eines Vergleichs der Messung mit einem zweiten Schwellwert darauf basierend, dass die Messung den ersten Schwellwert nicht erfüllt; und
Mittel zum Auslösen (305) des Meldens für die Strahlverfeinerung darauf basierend, dass die Messung den zweiten Schwellwert erfüllt.

6. Vorrichtung (20) nach Anspruch 5, wobei der erste Schwellwert der mehreren Schwellwerte auf einem festen Versatz vom zweiten Schwellwert der mehreren Schwellwerte basiert.

7. Vorrichtung (20) nach Anspruch 5 oder 6, die ferner Folgendes umfasst:
Mittel zum Bereitstellen einer Strahlverfeinerungsanforderung (414) für den Netzwerkknoten auf Basis des Auslösens des Meldens für eine Strahlverfeinerung; und
Mittel zum Empfangen einer Strahlverfeinerungsantwort (420) auf die Strahlverfeinerungsanforderung vom Netzwerkknoten.

8. Vorrichtung (20) nach einem der Ansprüche 5 bis 7, die ferner Folgendes umfasst:
Mittel zum Empfangen einer Messungs- und Meldeauslegung via einen Funkzugangsknoten auf Basis des Auslösens des Meldens vom Netzwerkknoten.

9. Vorrichtung (20) nach einem der vorhergehenden Ansprüche, wobei die Messung eine Messung eines Referenzsignalqualitätsniveaus des mindestens einen Strahls ist.

10. Vorrichtung (20) nach einem der vorhergehenden Ansprüche, wobei das Melden Informationen beinhaltet, die mindestens eines von Folgendem identifizieren: einer Differenz zwischen der Messung mit Bezug auf ein Qualitätsniveau des mindestens einen Strahls und einem oder mehreren der mehreren Schwellwerte, einem Absolutwert der Messung mit Bezug auf den einen oder die mehreren der mehreren Schwellwerte, einem Synchronisationssignal- und physischen Broadcastkanalblockindex oder einer Zellkennung der physischen Schicht einer Zelle, die mit einem Netzwerkknoten der nicht bedienenden Zelle verknüpft ist.

11. Verfahren, das Folgendes umfasst:
Empfangen einer Anforderung (410) zum Messen von mindestens einem Strahl, der mit einer nicht bedienenden Zelle verknüpft ist, durch eine Teilnehmereinrichtung (20) von einem Netzwerkknoten, wobei die Anforderung mit dem Veranlassen der Teilnehmereinrichtung, eine Messung des mindestens einen Strahls durchzuführen (412) und auf Basis eines Vergleichs der Messung und mehrerer Schwellwerte zu bestimmen, ob eine Strahlverfeinerung erforderlich ist, verknüpft ist;
Bestimmen, ob eine Positionsbestimmungsanwendung, die mit dem Durchführen einer Positionsbestimmungsmessung verknüpft ist, eine Latenz zulässt, die durch zusätzliches Signalisieren veranlasst wird, das mit der Strahlverfeinerung verknüpft ist;
Durchführen des Vergleichs der Messung mit den mehreren Schwellwerten in Abhängigkeit davon, ob die Positionsbestimmungsanwendung die Latenz zulässt;
Bestimmen (306), kein Melden für eine Strahlverfeinerung auszulösen, darauf basierend, dass die Messung die mehreren Schwellwerte nicht erfüllt.

12. Nichttransitorisches computerlesbares Medium, das Programmanweisungen umfasst, die, wenn sie von einer Vorrichtung (20) ausgeführt werden, die Vorrichtung veranlassen, das Verfahren nach Anspruch 11 durchzuführen.

## Revendications

1. Appareil (20), comprenant :
des moyens pour recevoir d'un nœud de réseau une demande (410) pour mesurer au moins un faisceau associé à une cellule non de desserte, dans lequel la demande est associée au fait d'amener l'appareil à effectuer (412) une mesure de l'au moins un faisceau et à déterminer si un affinement de faisceau est nécessaire sur la base d'une comparaison de la mesure et de multiples seuils ;
des moyens pour déterminer si une application de positionnement associée à la réalisation d'une mesure de positionnement autorise une latence causée par une signalisation supplémentaire associée au raffinement de faisceau ;
des moyens pour effectuer, selon que l'application de positionnement autorise ou non la latence, la comparaison de la mesure aux multiples seuils ;
des moyens pour déterminer (306) de ne pas déclencher de rapport pour un affinement de faisceau lorsque la mesure ne parvient pas à satisfaire aux multiples seuils.

2. Appareil (20) selon la revendication 1, comprenant en outre :
des moyens pour déterminer, avant de recevoir la demande, les multiples seuils sur la base d'une configuration de réseau.

3. Appareil (20) selon la revendication 1 ou 2, comprenant en outre :
des moyens pour effectuer (301) la mesure sur un signal de synchronisation et un bloc de canal de diffusion physique, un signal de référence d'informations d'état de canal, ou un signal de référence d'informations d'état de canal pour une gestion de la mobilité de couche 3.

4. Appareil (20) selon l'une des revendications précédentes, comprenant en outre :
des moyens pour effectuer (302) une comparaison de la mesure à un premier seuil ; et
des moyens pour effectuer la mesure de positionnement lorsque la mesure satisfait au premier seuil.

5. Appareil (20) selon la revendication 4, comprenant en outre :
des moyens pour effectuer (304) une comparaison de la mesure à un deuxième seuil lorsque la mesure ne parvient pas à satisfaire au premier seuil ; et
des moyens pour déclencher (305) le rapport pour l'affinement de faisceau lorsque la mesure satisfait au deuxième seuil.

6. Appareil (20) selon la revendication 5, dans lequel le premier seuil des multiples seuils est basé sur un décalage fixe par rapport au deuxième seuil des multiples seuils.

7. Appareil (20) selon la revendication 5 ou 6, comprenant en outre :
des moyens pour fournir au nœud de réseau une demande d'affinement de faisceau (414) sur la base du déclenchement du rapport pour un affinement de faisceau ; et
des moyens pour recevoir du nœud de réseau une réponse d'affinement de faisceau (420) à la demande d'affinement de faisceau.

8. Appareil (20) selon l'une des revendications 5 à 7, comprenant en outre :
des moyens pour recevoir du nœud de réseau une configuration de mesure et de rapport via un nœud d'accès radio sur la base du déclenchement du rapport.

9. Appareil (20) selon l'une des revendications précédentes, dans lequel la mesure est une mesure du niveau de qualité de signal de référence de l'au moins un faisceau.

10. Appareil (20) selon l'une des revendications précédentes, dans lequel le rapport comporte des informations qui identifient au moins l'un des éléments suivants : une différence entre la mesure par rapport à un niveau de qualité de l'au moins un faisceau et un ou plusieurs des multiples seuils, une valeur absolue de la mesure par rapport à un ou plusieurs des multiples seuils, un signal de synchronisation et un indice de bloc de canal de diffusion physique ou un identifiant de cellule de couche physique d'une cellule associée à un nœud de réseau de la cellule non de desserte.

11. Procédé, comprenant les étapes suivantes :
recevoir d'un nœud de réseau, par un équipement utilisateur (20), une demande (410) pour mesurer au moins un faisceau associé à une cellule non de desserte, dans lequel la demande est associée au fait d'amener l'équipement utilisateur à effectuer (412) une mesure de l'au moins un faisceau et à déterminer si un affinement de faisceau est nécessaire sur la base d'une comparaison de la mesure et de multiples seuils ;
déterminer si une application de positionnement associée à la réalisation d'une mesure de positionnement autorise une latence causée par une signalisation supplémentaire associée au raffinement de faisceau ;
effectuer, selon que l'application de positionnement autorise ou non la latence, la comparaison de la mesure aux multiples seuils ;
déterminer (306) de ne pas déclencher de rapport pour un affinement de faisceau lorsque la mesure ne parvient pas à satisfaire aux multiples seuils.

12. Support non transitoire lisible par ordinateur comprenant des instructions de programme qui, lorsqu'elles sont exécutées par un appareil (20), amènent l'appareil effectuer le procédé selon la revendication 11.
